# EUROPÄISCHE PATENTSCHRIFT

(11) **EP 1 954 996 B1**
(45) Veröffentlichungstag und Bekanntmachung des Hinweises auf die Patenterteilung: **21.07.2010**
(21) Anmeldenummer: 06829180.6
(22) Anmeldetag: 29.11.2006
(51) Int. Cl.: F27B 7/20, C04B 7/43

(54) **ANLAGE ZUR HERSTELLUNG VON ZEMENTKLINKER, UND VERFAHREN ZUM BETRIEB EINER SOLCHEN ANLAGE**
INSTALLATION FOR PRODUCING CEMENT CLINKER, AND METHOD FOR OPERATING ONE SUCH INSTALLATION
INSTALLATION DE PRODUCTION DE SCORIES DE CIMENT ET PROCEDE POUR FAIRE FONCTIONNER UNE TELLE INSTALLATION

(30) Priorität: 01.12.2005 DE 102005057346
(43) Veröffentlichungstag der Anmeldung: 13.08.2008
(73) Patentinhaber: KHD Humboldt Wedag GmbH, 51105 Köln (DE)
(72) Erfinder: SCHÜRMANN, Heiko, 50737 Köln (DE); ECKERT, Carsten, 51491 Overath (DE)
(86) Internationale Anmeldenummer: PCT/EP2006/011453
(87) Internationale Veröffentlichungsnummer: WO 2007/062823

(56) Entgegenhaltungen:
- WO-A-2005/059460
- US-A- 5 713 734

## Beschreibung

Die Erfindung betrifft eine Anlage zur Herstellung von Zementlinker aus Rohmehl, das in einem Brennprozess durch Vorwärmen, Calcinieren, Sintern und Kühlen thermisch behandelt wird und der Abgasstrom der Sinterstufe (Drehrohrofen) und ein Abluftstrom (Tertiärluft) der Kühlstufe (Klinkerkühler) in der mit Brennstoff versorgten Calcinierstufe zur Calcination des Rohmehls genutzt werden, wobei in die Calcinierstufe eine Brennkammer mit in die Kammeroberseite eingeführtem Sekundärbrennstoff und Tertiärluftteilstrom mit unterstöchiometrischer Brennstoffverbrennung integriert ist zwecks Bildung einer CO-haltigen Reduktionszone zur Reduktion des Schadstoffes NOₓ, und wobei die Unterseite der Brennkammer über eine Verbindungsleitung mit dem unteren Bereich der Drehofenabgassteigleitung in Verbindung steht. Außerdem betrifft die Erfindung ein Verfahren zum Betrieb einer solchen Anlage.

Anlagen zur Herstellung von Zementklinker aus Rohmehl der oben beschriebenen Art mit einer dem Drehrohrofen vorgeschalteten, mit einer Zweitfeuerung ausgestatteten Calcinierstufe müssen in der Lage sein, ein hochgradig calciniertes Rohmehl vor Einführung in den Drehrohrofen zu erzeugen. Gleichzeitig werden die Erbauer und Betreiber von Zementklinkerproduktionslinien mit dem Problem des Einsatzes von Sekundärbrennstoffen und mit immer schärferen Forderungen nach niedrigen Emissionswerten bei Schadstoffen wie NOₓ und CO konfrontiert.

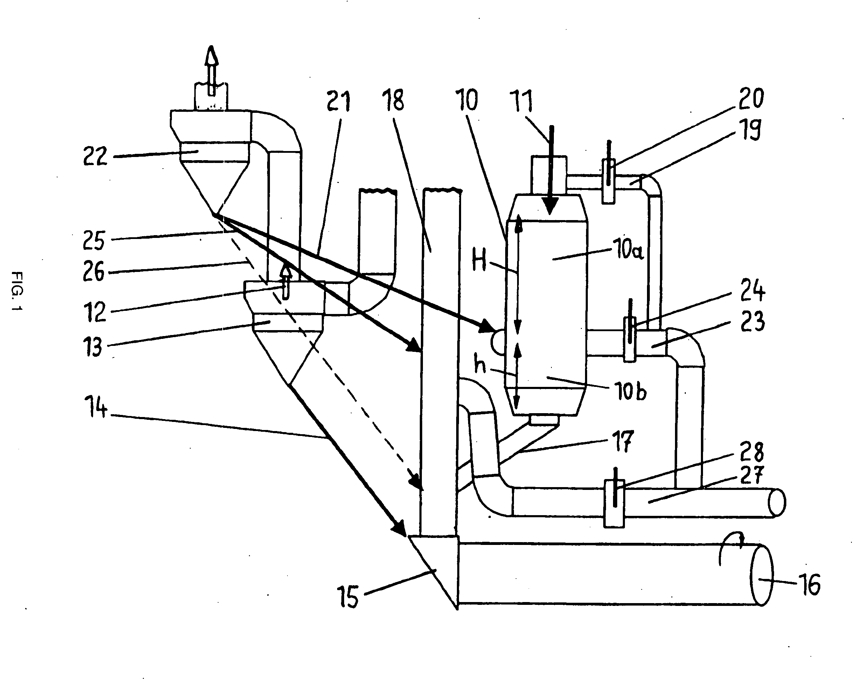

Zur Reduzierung solcher Schadstoffemissionen ist es bei einer Zementklinkerproduktionsanlage bekannt (Fachzeitschrift "World Cement" Februar 1995, Aufsatz Seiten 2 bis 8 insbesondere Figuren 1 und 7), in die Calcinierstufe eine von oben nach unten durchströmte sogenannte RSP-Calcinier-Brennkammer zu integrieren, in deren Oberseite ein Calcinierbrennstoff, ein erster Tertiärluftteilstrom sowie aus der zweituntersten Zyklonstufe des Rohmehlvorwärmers vorerhitztes Rohmehl und darunterliegend tangential ein zweiter Tertiärluftteilstrom eingeblasen werden, der die Reaktionspartner in der Brennkammer verwirbelt. In der Brennkammer werden die Brennstoffe unterstöchiometrisch, das heißt mit Sauerstoffunterschuss verbrannt zur Bildung einer CO-haltigen Reduktionszone zur Reduktion des Schadstoffes NOₓ, der insbesondere durch die Hochtemperaturverbrennung im Drehrohrofen gebildet worden ist (thermisches NOₓ). Dazu ist die Unterseite der RSP-Brennkammer über eine Verbindungsleitung mit dem unteren Bereich der Drehofenabgassteigleitung verbunden, so dass sich bei der bekannten Zementklinkerproduktionslinie die CO-haltige Reduktionszone vom Inneren der Calcinier-Brennkammer über die untere Verbindungsleitung in die Drehofenabgassteigleitung und dort hinauf bis zum 180°-Rohrleitungskrümmer der Drehofenabgassteigleitung erstreckt, weil erst dort ein dritter Tertiärluftteilstrom eingeführt wird zwecks Restausbrandes des in der gesamten langen NOₓ-Reduktionszone verbliebenen nicht verbrauchten CO mittels überschüssigen Sauerstoffs.

Die Länge der CO-haltigen Reduktionszone ist bei der bekannten Zementklinkerproduktionslinie mit der RSP-Calcinier-Brennkammer nicht ohne weiteres an den im Drehofenabgas enthaltenen abzubauenden NOx-Gehalt und/oder an Art, Stückgröße und Eigenschaft der in der Calcinier-Brennkammer eingesetzten Sekundärbrennstoffe anpassbar.

Der Erfindung liegt die Aufgabe zugrunde, eine Zementklinkerproduktionslinie der oben beschriebenen Art mit einer dem Drehrohrofen vorgeschalteten Calcinierstufe mit integrierter Calcinier-Brennkammer zu schaffen mit Bildung einer CO-haltigen Reduktionszone, deren Größe bzw. Reduktionspotential mit einfachen Mitteln an unterschiedliche im Drehofenabgas enthaltene NOₓ-Gehalte und/oder unterschiedliche Arten, Stückgrößen und Eigenschaften der in der Calcinier-Brennkammer eingesetzten Sekundärbrennstoffe anpassbar sind.

Diese Aufgabe wird gemäß der Erfindung anlagenschaltungsmäßig mit den Merkmalen des Anspruchs 1 und betriebsverfahrensmäßig mit den Maßnahmen des Anspruchs 3 gelöst. Vorteilhafte Ausgestaltungen der Erfindung sind in den jeweiligen Unteransprüchen angegeben.

Bei der Zementklinkerproduktionslinie mit der erfindungsgemäßen Calcinierstufe mit integrierter Calcinier-Brennkammer ist es durch deren anlagentechnische Schaltung, aber auch durch deren flexibel variablen Betriebsweise möglich, das Reduktionspotential sowie die Größe bzw. Länge der in der Brennkammer gebildeten CO-haltigen Reduktionszone an die im Drehofenabgas enthaltenen NOₓ-Gehalte anzupassen sowie in der Brennkammer Sekundärbrennstoffe auch unterschiedlicher Art und Stückgröße zu verwerten bzw. zu entsorgen. Dies wird durch folgende Gestaltung und Schaltung der erfindungsgemäßen Calcinierstufe erreicht:

Die Calcinier-Brennkammer weist eine obere rohmehlfreie reduzierende Zone auf mit an der Brennkammeroberseite angeordneter Zuführung des Sekundärbrennstoffs und erstem Tertiärluftteilstrom mit unterstöchiometrischer Brennstoffverbrennung zwecks Vergasung des Sekundärbrennstoffs zur Bildung eines CO-haltigen Synthesegases/Brenngases bzw. einer entsprechenden Reduktionszone.

Die Calcinier-Brennkammer weist ferner eine untere Zone auf, wobei im Übergangsbereich von oberer rohmehlfreier reduzierender Zone zur unteren Zone die Einführung wenigstens eines Rohmehlteilstromes und eines zweiten Tertiärluftteilstromes angeordnet ist. Dabei liegt die Höhe der oberen rohmehlfreien Zone der Brennkammer zur Höhe der unteren Zone in einem Verhältnis von etwa 5:1 bis etwa 1:1.

Oberhalb der Einmündung der Brennkammer-Verbindungsleitung in die Drehofenabgassteigleitung mündet etwa im Höhenbereich der Brennkammer eine dritte Tertiärluft-Teilstromleitung sowie ein zweiter Rohmehlteilstrom in die Drehofenabgassteigleitung ein. Spätestens ab dieser Stelle kann der Restausbrand des in der Calcinierstufe noch enthaltenen nicht umgesetzten CO sowie anderer nicht vollständig ausgebrannter Brennstoffkomponenten beginnen.

Jeder der wenigstens drei Tertiärluftteilstromleitungen ist ein Stellorgan zu Regelung der jeweiligen Tertiärluftmenge zugeordnet. Mehrere Betriebsweisen der erfindungsgemäßen Calcinierstufe sind möglich:

Während des Anfahrbetriebes der Zementklinkerproduktionslinie sind die Stellorgane, die in den beiden an die Brennkammer angeschlossenen Tertiärluft-Teilstromleitungen angeordnet sind, geöffnet, und das in der dritten Tertiärluft-Teilstromleitung angeordnete Stellorgan ist anfangs geschlossen. Der obere rohmehlfreie Bereich der Brennkammer wird als reduzierende Zone und der untere Bereich der Brennkammer als oxidierende Zone betrieben, das heißt, das in der Calcinier-Brennkammer in der oberen Zone gebildete CO-haltige Synthesegas kann bereits in der unteren Zone der Brennkammer beginnen, zu verbrennen.

Für den Anfahrbetrieb genügt die geringere Größe bzw. das geringere Reduktionspotential. Dagegen kann während des Dauerbetriebes der Zementklinkerproduktionslinie das Stellorgan, das in der an den Übergangsbereich von oberer reduzierender Zone zur unteren Zone der Brennkammer angeschlossenen zweiten Tertiärluftteilstromleitung angeordnet ist, geschlossen sein, wogegen die übrigen zwei Stellorgane, nämlich das in der ersten Tertiärluft-Teilstromleitung angeordnete Stellorgan und das in der dritten Tertiärluft-Teilstromleitung angeordnete Stellorgan geöffnet sind. Bei diesem Betrieb sind Größe bzw. Länge und Reduktionspotential der in der Brennkammer erzeugten Reduktionszone entsprechend vergrößert.

Mit Vorteil wird während des Dauerbetriebes der Zementklinkerproduktionslinie mit der erfindungsgemäßen Calcinierstufe die Luftzahl in der Calcinier-Brennkammer sowie in der Brennkammer-Verbindungsleitung auf λ < 0,40, im unteren Bereich der Drehofenabgassteigleitung bis zur Einmündung der dritten Tertiärluft-Teilstromleitung auf λ < 0,60 und im oberen Bereich der Drehofenabgassteigleitung nach Einmündung der dritten Tertiärluft-Teilstromleitung auf λ > 1,0 eingestellt.

Die Erfindung und deren weitere Merkmale und Vorteile werden anhand des in der Zeichnung schematisch dargestellten Ausführungsbeispieles näher erläutert.

Die Zeichnung zeigt ausschnittsweise eine Zementklinkerproduktionslinie, in deren Calcinierstufe eine Calcinier-Brennkammer 10 mit Verwertung/Entsorgung von ggf. auch stückigen Sekundärbrennstoffen 11 integriert ist.

Das Zementrohmehl wird oben in die als Zyklonschwebegas-Wärmetauschersystem ausgebildete Vorwärmstufe aufgegeben, wo es nacheinander mehrere Zyklonstufen im kombinierten Gleich/Gegenstrom zum heißen Abgas 12 der Vorcalcinationsstufe durchwandert, um im untersten Zyklon 13 vom heißen Abgasstrom 12 abgetrennt und als hochgradig (z. B. 95 %) calciniertes Zementrohmehl 14 in die Einlaufkammer 15 des Drehrohrofens 16 eingeführt zu werden, in dessen Sinterzone es zu Zementklinker gebrannt wird, der anschließend in einem nicht dargestellten Klinkerkühler abgekühlt wird.

Der Abgasstrom des Drehrohrofens 16 und Tertiärluft aus dem Klinkerkühler werden in der mit Brennstoff versorgten Calcinierstufe zur Calcination des Rohmehls genutzt. Dazu ist in die Calcinierstufe die Brennkammer 10 integriert, deren Unterseite über eine schräg nach unten verlaufende Verbindungsleitung 17 mit dem unteren Bereich der Drehofenabgassteigleitung 18 in Verbindung steht.

Die Calcinier-Brennkammer 10 weist eine obere rohmehlfreie reduzierende Zone 10a auf mit an der Brennkammeroberseite angeordneter Zuführung der Sekundärbrennstoffe 11 und Anschluss einer ersten Tertiärluft-Teilstromleitung 19 mit Stellorgan 20 wie z. B. Schieber zur Regelung der jeweiligen Tertiärluftmenge. Die Sekundärbrennstoffe 11 werden in der Brennkammer 10 unterstöchiometrisch verbrannt bei einer Luftzahl λ < 0,8, z. B. λ = 0,40 zwecks Vergasung der Sekundärbrennstoffe und Bildung einer CO-haltigen Reduktionszone. Die Brennkammer 10 weist ferner eine untere Zone 10b auf, wobei im Übergangsbereich von oberer rohmehlfreier reduzierender Zone 10a zur unteren Zone 10b die Einführung wenigstens eines Rohmehlteilstromes 21 aus der zweituntersten Zyklonstufe 22 sowie die Einführung einer zweiten Tertiärluft-Teilstromleitung 23 mit Stellorgan 24 angeordnet sind. Dabei kann die Höhe H der oberen rohmehtfreien Zone 10a der Brennkammer 10 zur Höhe h der unteren Zone 10b in einem Verhältnis von etwa 5:1 bis etwa 1:1 liegen.

Der reduzierenden Zone 10a mit der Vergasung der Sekundärbrennstoffe 11 wird durch diese Dimensionierung Raum und Zeit gegeben zur thermischen Aufbereitung und Behandlung mit Trocknung, Pyrolyse und Vergasung der ggf. auch stückigen Sekundärbrennstoffe 11 mit Schaffung eines Brenngases hohen Reduktionspotentials, dessen Höhe insbesondere durch Regeleingriff auf das Stellorgan 24 einfach und wirkungsvoll einstellbar ist.

Über die Brennkammer-Verbindungsleitung 17 wird das Schwelgas/Verbrennungsabgas-Feststoff-Gemisch abgezogen und in die Drehofenabgassteigleitung 18 eingetragen, wobei es sich beim Feststoff um ein Gemisch aus festen Reststoffen der Schwelung/Verbrennung, z. B. Schlacke und Restkoks, und um vorcalciniertes Zementrohmehl handelt. Die gröberen Bestandteile dieses Feststoffgemisches können ggf. unmittelbar in die Drehofeneinlaufkammer 15 fallen, während das Schwelgas-Verbrennungsabgas sowie die feinkörnigen Bestandteile des ausgetragenen Feststoffgemisches, insbesondere der in der Brennkammer 10 behandelte Rohmehlteilstrom im Abgasstrom der Drehofenabgassteigleitung 18 in Suspension gehalten und dort pneumatisch zur untersten Zyklonstufe 13 transportiert werden. In die Drehofenabgassteigleitung 18 können noch weitere von der zweituntersten Zyklonstufe des Rohmehlvorwärmers kommende Rohmehlteilströme 25, 26 sowie ggf. auch noch ein weiterer Calcinier-Brennstoff eingeführt werden.

Mit Abstand oberhalb der Einmündung der Brennkammer-Verbindungsleitung 17 in die Drehofenabgassteigleitung 18 mündet im Höhenbereich der Brennkammer 10 eine dritte Tertiärluft-Teilstromleitung 27 mit Stellorgan 28 sowie ggf. der weitere Rohmehlteilstrom 25 ein. Spätestens ab hier beginnt der Restausbrand des CO und ggf. unverbrannt gebliebener Kohlenwasserstoffe, die in der in der Drehofenabgassteigleitung weiter unten gelegenen NOₓ-Reduktionszone zur Reduktion des im Drehofenabgas enthaltenen Schadstoffes NOₓ als überschüssige Reduktionsmittel unverbrannt geblieben sind. Der vollständige Restausbrand wird durch die Strömungsumlenkung um etwa 180° an der obersten Stelle der Drehofenabgassteigleitung 18 sowie ggf. noch durch eine Wirbelkammer bzw. Mischkammer, die im Bereich der Strömungsumlenkung vom aufsteigenden in den absteigenden Rohrleitungsast der Calcinierstufe angeordnet ist, sichergestellt.

Die mit der erfindungsgemäßen Calcinierstufe einer Zementklinkerproduktionslinie verbundene flexible Betriebsweise wird wie folgt veranschaulicht:

Während des Anfahrbetriebes der Zementklinkerproduktionslinie sind die in den Tertiärluftteilstromleitungen angeordneten Stellorgane 20 und 24 geöffnet, Stellorgan 28 anfangs geschlossen, und der obere rohmehlfreie Bereich der Brennkammer wird als reduzierende Zone 10a und der untere Bereich der Brennkammer wird als oxidierende Zone betrieben. Dabei ist das erzeugte Reduktionspotential noch gering, wie es für den Anfahrbetrieb aber ausreichend ist, weil ein hoher NOₓ-Minderungsbedarf im Anfahrbetrieb noch nicht gegeben ist.

Dagegen wird im Dauerbetrieb der Zementklinkerproduktionslinie das Stellorgan 24 geschlossen, das Stellorgan 20 bleibt geöffnet und das Stellorgan 28 wird geöffnet. In diesem Betriebszustand werden Größe bzw. Länge und Reduktionspotential der reduzierenden Zone groß. Dabei kann nach einem Ausführungsbeispiel die Luftzahl in der gesamten Brennkammer sowie in der Verbindungsleitung 17 auf λ=0,37, im unteren Bereich der Drehofenabgassteigleitung 18 bis zur Einmündung der dritten Tertiärluft-Teilstromleitung auf λ = 0,50 und im oberen Bereich der Drehofenabgassteigleitung 18 nach Einmündung der dritten Tertiärluft-Teilstromleitung 27 auf λ > 1,0 eingestellt werden. Bei diesem Zahlenbeispiel werden etwa 25 % der der Calcinierstufe insgesamt zugeführten Tertiärluft in die Brennkammer 10 eingeführt, während die restlichen 75 % der Tertiärluft unmittelbar in die Drehofenabgassteigleitung 18 eingeführt werden.

Das in der ersten Tertiärluft-Teilstromleitung 19 angeordnete Stellorgan 20 wird mit Vorteil in Abhängigkeit der Temperatur in der oberen reduzierenden Zone 10a der Brennkammer 10 geregelt, wobei diese Temperatur auf < 1100° C gehalten wird, wodurch die Ausmauerung der Brennkammer geschützt wird. Die Luftzahl λ wird auf < 0,8 eingestellt, so dass ein autothermer Betrieb der Brennkammer möglich ist.

Sofern die in die Brennkammer 10 oben eingeführten zu verwertenden bzw. zu entsorgenden Sekundärbrennstoffe 11 sehr reaktionsträge sind, kann im Bereich der Sekundärbrennstoffeinführung noch ein Zündbrenner angeordnet sein.

Es besteht auch die Möglichkeit, die Brennkammer 10 gänzlich ohne Rohmehleinführung zu betreiben, d. h. von den Rohmehlteilströmen 21, 25, 26 den erstgenannten wegzulassen.

## Patentansprüche

1. Anlage zur Herstellung von Zementklinker aus Rohmehl, welche das Rohmehl in einem Brennprozess durch Vorwärmen, Calcinieren, Sintern und Kühlen thermisch behandelt und die einen Abgasstrom eines Drehrohrofens als Sinterstufe und einen Abluftstrom der Kühlstufe in der mit Brennstoff versorgten Calcinierstufe zur Calcination des Rohmehls nutzt, wobei in die Calcinerstufe eine Brennkammer (10) mit in die Kammeroberseite eingeführtem Sekundärbrennstoff (11) und Tertiärluftteilstrom (20) mit unterstöchiometrischer Brennstoffverbrennung integriert ist, und wobei die Unterseite der Brennkammer (10) über eine Verbindungsleitung (17) mit dem unteren Bereich der Drehofenabgassteigleitung (18) in Verbindung steht,
**dadurch gekennzeichnet, dass**
a) die Calcinier-Brennkammer (10) eine obere rohmehlfreie reduzierende Zone (10a) mit an der Brennkammeroberseite angeordneter Zuführung von Sekundärbrennstoff (11) und einen ersten Tertiärluftteilstrom (19) aufweist, und
b) eine untere Zone (10b) aufweist, wobei im Übergangsbereich von oberer rohmehlfreier reduzierender Zone (10a) zur unteren Zone (10b) die Einführung wenigstens eines Rohmehlteilstromes (21) und eines zweiten Tertiärlufteilstromes (23) angeordnet ist, und wobei
c) die Höhe (H) der oberen rohmehlfreien Zone (10a) der Brennkammer (10) zur Höhe (h) der unteren Zone (10b) in einem Verhältnis von 5:1 bis 1:1 liegt, und wobei
d) oberhalb der Einmündung der Brennkammer-Verbindungsleitung (17) in die Drehofenabgassteigleitung (18) im Höhenbereich der Brennkammer (10) eine dritte Tertiärluft-Teilstromleitung (27) sowie ein zweiter Rohmehlteilstrom (25) in die Drehofenabgassteigleitung (18) einmündet, und wobei
e) jeder der drei Tertiärluft-Teilstromleitungen (19, 23, 27) ein Stellorgan (20, 24, 28) zur Regelung der jeweiligen Tertiärluftmenge zugeordnet ist

2. Verfahren zum Betrieb einer Anlage zur Herstellung von Zementklinker aus Rohmehl nach Anspruch 1,
**dadurch gekennzeichnet, dass** während des Dauerbetriebes der Zementklinkerproduktionslinie das Stellorgan (24), das in der an den Übergangsbereich von oberer reduzierender Zone (10a) zur unteren Zone (10b) der Brennkammer (10) angeschlossenen zweiten Tertiärluft-Teilstromleitung (23) angeordnet ist, geschlossen ist, wogegen das Stellorgan (20), das in der an die Brennkammeroberseite angeschlossenen ersten Tertiärluft-Teilstromleitung (19) angeordnet ist, und das in der in die Drehofenabgassteigleitung (18) einmündenden dritten Tertiärluft-Teilstromleitung (27) angeordnete Stellorgan (28) geöffnet sind.

3. Verfahren nach Anspruch 2,
**dadurch gekennzeichnet, dass** während des Anfahrbetriebes der Zementklinkerproduktionslinie die in den Tertiärluft-Teilstromleitungen angeordneten Stellorgane (20 und 24) geöffnet sind und der obere rohmehlfreie Bereich der Brennkammer (10) als reduzierende Zone (10a) und der untere Bereich der Brennkammer als oxidierende Zone betrieben werden und das Stellorgan (28) geschlossen ist.

4. Verfahren nach Anspruch 3,
**dadurch gekennzeichnet, dass** das in der ersten Tertiärluft-Teilstromleitung (19) angeordnete Stellorgan (20) in Abhängigkeit der Temperatur in der oberen reduzierenden Zone (10a) der Brennkammer (10) geregelt wird, wobei diese Temperatur auf < 1100° C gehalten wird.

5. Verfahren nach Anspruch 2,
**dadurch gekennzeichnet, dass** während des Dauerbetriebes der Zementklinkerproduktionslinie die Luftzahl in der Brennkammer (10) sowie in der Brennkammer-Verbindungsleitung (17) und im unteren Bereich der Drehofenabgassteigleitung (18) auf λ < 0,8 gehalten wird.

6. Verfahren nach den Ansprüchen 2 oder 5,
**dadurch gekennzeichnet, dass** während des Dauerbetriebes der Zementklinkerproduktionslinie die Luftzahl in der Brennkammer (10) sowie in der Brennkammer-Verbindungsleitung (17) auf λ < 0,40, im unteren Bereich der Drehofenabgassteigleitung (18) bis zur Einmündung der dritten Tertiärluft-Teilstromleitung (27) auf λ < 0,60 und im oberen Bereich der Drehofenabgassteigleitung (18) nach Einmündung der dritten Tertiärluft-Teilstromleitung (27) auf λ > 1,0 eingestellt wird.

## Claims

1. Installation for manufacturing cement clinker from raw meal which treats the raw meal thermally in a combustion process by preheating, calcining, sintering and cooling, and which uses an exhaust gas stream of a rotary tubular kiln as a sintering stage and an exhaust gas stream of the cooling stage in the calcining stage, which is supplied with fuel, to calcine the raw meal, a combustion chamber (10) with secondary fuel (11) introduced into the upper side of the chamber and a tertiary partial airstream (20) with sub-stoichiometric fuel combustion being integrated in the calcining stage, and the underside of the combustion chamber (10) being connected via a connecting line (17) to the lower region of the rotary kiln exhaust gas rising line (18), **characterized in that**:
a) the calcining combustion chamber (10) has an upper raw-meal-free reducing zone (10a) with a feed for secondary fuel (11) arranged at the upper side of the combustion chamber, and a first tertiary partial airstream (19), and
b) has a lower zone (10b), the inflow of at least one raw meal partial stream (21) and of a second tertiary partial air stream (23) being arranged in the junction region between the upper raw-meal-free, reducing zone (10a) and the lower zone (10b), and
c) the height (H) of the upper, raw-meal-free zone (10a) of the combustion chamber (10) in relation to the height (h) of the lower zone (10b) having a ratio of 5:1 to 1:1, and
d) a third tertiary partial airstream line (27) and a second raw meal partial stream (25) passing into the rotary kiln exhaust gas rising line (18) above the junction of the combustion chamber connecting line (17) and the rotary kiln exhaust gas rising line (18) in the upper region of the combustion chamber (10), and
e) each of the three tertiary partial airstream lines (19, 23, 27) being assigned an actuating element (20, 24, 28) for regulating the respective tertiary air flow rate.

2. Method for operating an installation for manufacturing cement clinker from raw meal according to Claim 1, **characterized in that** during the continuous operation of the cement clinker production line the actuating element (24) which is arranged in the second tertiary partial airstream line (23) connected to the junction region of the upper reducing zone (10a) and the lower zone (10b) of the combustion chamber (10) is closed, whereas the actuating element (20) which is arranged in the first tertiary partial airstream line (19) connected to the upper side of the combustion chamber and the actuating element (28) which is arranged in the third tertiary partial airstream line (27) which leads into the rotary kiln exhaust gas rising line (18) are opened.

3. Method according to Claim 2,
**characterized in that** during the starting operation of the cement clinker production line the actuating elements (20 and 24) which are arranged in the tertiary partial airstream lines are opened, and the upper raw-meal-free region of the combustion chamber (10) is operated as a reducing zone (10a), and the lower region of the combustion chamber is operated as an oxidizing zone, and the actuating element (28) is closed.

4. Method according to Claim 3,
**characterized in that** the actuating element (20) which is arranged in the first tertiary partial airstream line (19) is regulated as a function of the temperature in the upper, reducing zone (10a) of the combustion chamber (10), this temperature being kept at <1100°C.

5. Method according to Claim 2,
**characterized in that** during the continuous operation of the cement clinker production line the excess air factor in the combustion chamber (10) and in the combustion chamber connecting line (17) and in the lower region of the rotary kiln exhaust gas rising line (18) is kept at λ < 0.8.

6. Method according to Claims 2 or 5,
**characterized in that** during the continuous operation of the cement clinker production line the excess air factor in the combustion chamber (10) and in the combustion chamber connecting line (17) is set to λ < 0.40, and in the lower region of the rotary kiln exhaust gas rising line (18) up to the junction with the third tertiary partial airstream line (27) it is set to λ < 0.60 and in the upper region of the rotary kiln exhaust gas rising line (18) downstream of the junction with the third tertiary partial airstream line (27) it is set to λ > 1.0.

## Revendications

1. Installation de production de clinker à partir de farine crue, qui traite thermiquement la farine crue dans un processus de combustion par préchauffage, calcination, agglomération et refroidissement et qui utilise un courant de gaz d'échappement d'un four rotatif comme étape d'agglomération et un courant d'air d'échappement de l'étape de refroidissement dans l'étape de calcination alimentée en combustible pour la calcination de la farine crue, dans laquelle une chambre de combustion (10) avec un combustible secondaire (11) introduit dans le côté supérieur de la chambre et un courant d'air tertiaire (20) avec combustion sous-stoechiométrique du combustible est intégrée dans l'étape de calcination, et dans laquelle le côté inférieur de la chambre de combustion (10) est en communication avec la zone inférieure de la colonne montante (18) des gaz d'échappement du four rotatif par l'intermédiaire d'une conduite de liaison (17), **caractérisée en ce que**
a) la chambre de combustion de calcination (10) présente une zone réductrice supérieure libre de farine crue (10a) avec une arrivée de combustible secondaire (11) disposée sur le côté supérieur de la chambre de combustion, et un premier courant partiel d'air tertiaire (19), et
b) présente une zone inférieure (10b), dans laquelle l'introduction d'au moins un courant partiel de farine crue (21) et d'un deuxième courant partiel d'air tertiaire (23) est disposée dans la zone de transition de la zone réductrice supérieure libre de farine crue (10a) à la zone inférieure (10b), et dans laquelle
c) la hauteur (H) de la zone supérieure libre de farine crue (10a) de la chambre de combustion (10) se situe dans un rapport de 5:1 à 1:1 par rapport à la hauteur (h) de la zone inférieure (10b), et dans laquelle
d) une troisième conduite de courant partiel d'air tertiaire (27) débouche dans la colonne montante des gaz d'échappement du four rotatif (18) à hauteur de la chambre de combustion (10), au-dessus de l'embouchure de la conduite de liaison de la chambre de combustion (17) et un deuxième courant partiel de farine crue (25) débouche dans la colonne montante des gaz d'échappement du four rotatif (18), et dans laquelle
e) un organe de réglage (20, 24, 28) est associé à chacune des conduites de courant partiel d'air tertiaire (19, 23, 27) pour la régulation des débits d'air tertiaire respectifs.

2. Procédé pour faire fonctionner une installation de production de clinker à partir de farine crue selon la revendication 1, **caractérisé en ce que**, pendant le fonctionnement continu de la ligne de production de clinker, l'organe de réglage (24), qui est disposé dans la deuxième conduite de courant partiel d'air tertiaire (23) raccordée à la zone de transition de la zone réductrice supérieure (10a) à la zone inférieure (10b) de la chambre de combustion (10), est fermé, l'organe de réglage (20), qui est disposé dans la première conduite de courant d'air tertiaire (19) raccordée au côté supérieur de la chambre de combustion, et l'organe de réglage (28), qui est disposé dans la troisième conduite de courant partiel d'air tertiaire (27) débouchant dans la colonne montante des gaz d'échappement du four rotatif (18), sont au contraire ouverts.

3. Procédé selon la revendication 2, **caractérisé en ce que**, pendant le fonctionnement de démarrage du four rotatif de production de clinker, les organes de réglage (20 et 24), qui sont disposés dans les conduites de courant partiel d'air tertiaire sont ouverts et on fait fonctionner la zone supérieure libre de farine crue de la chambre de combustion (10) comme zone réductrice (10a) et la zone inférieure de la chambre de combustion comme zone oxydante, et l'organe de réglage (28) est fermé.

4. Procédé selon la revendication 3, **caractérisé en ce que** l'on régule l'organe de réglage (20) disposé dans la première conduite de courant partiel d'air tertiaire (19) en fonction de la température dans la zone réductrice supérieure (10a) de la chambre de combustion (10), dans lequel on maintient cette température à < 1100°C.

5. Procédé selon la revendication 2, **caractérisé en ce que**, pendant le fonctionnement continu de la ligne de production de clinker, on maintient l'excès d'air dans la chambre de combustion (10) ainsi que dans la conduite de liaison de la chambre de combustion (17) et dans la zone inférieure de la colonne montante des gaz d'échappement du four rotatif (18) à λ < 0,8.

6. Procédé selon les revendications 2 ou 5, **caractérisé en ce que**, pendant le fonctionnement continu de la ligne de production de clinker, on règle l'excès d'air dans la chambre de combustion (10) ainsi que dans la conduite de liaison de la chambre de combustion (17) à λ < 0,40, dans la zone inférieure de la colonne montante des gaz d'échappement du four rotatif (18) jusqu'à l'embouchure de la troisième conduite de courant partiel d'air tertiaire (27) à λ < 0,60 et dans la zone supérieure de la colonne montante des gaz d'échappement du four rotatif (18) après l'embouchure de la troisième conduite de courant partiel d'air tertiaire (27) à λ > 1,0.
